(19) Europäisches Patentamt / European Patent Office / Office européen des brevets

(11) **EP 3 315 578 B1**

(12) **EUROPEAN PATENT SPECIFICATION**

(45) Date of publication and mention
of the grant of the patent:
**20.03.2024 Bulletin 2024/12**

(21) Application number: **16814283.4**

(22) Date of filing: **17.06.2016**

(51) International Patent Classification (IPC):
$C09K\ 3/18$ (2006.01)    $C08F\ 214/08$ (2006.01)
$C08F\ 220/18$ (2006.01)    $C08F\ 220/24$ (2006.01)
$C08F\ 220/56$ (2006.01)    $D06M\ 15/248$ (2006.01)
$D06M\ 15/263$ (2006.01)    $D06M\ 15/277$ (2006.01)
$D06M\ 15/295$ (2006.01)

(52) Cooperative Patent Classification (CPC):
(C-Sets available)
**C09K 3/18; C08F 214/08; C08F 220/24;
C09D 127/08; D06M 15/248; D06M 15/263;
D06M 15/277; D06M 15/295;** D06M 2200/12

(Cont.)

(86) International application number:
**PCT/JP2016/068141**

(87) International publication number:
**WO 2016/208512 (29.12.2016 Gazette 2016/52)**

(54) **WATER REPELLENT COMPOSITION, METHOD FOR PRODUCING WATER REPELLENT COMPOSITION, AND ARTICLE**

WASSERABWEISENDE ZUSAMMENSETZUNG, VERFAHREN ZUR HERSTELLUNG EINER WASSERABWEISENDEN ZUSAMMENSETZUNG UND ARTIKEL

COMPOSITION HYDROFUGE, PROCÉDÉ DE PRODUCTION DE COMPOSITION HYDROFUGE, ET ARTICLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.06.2015 JP 2015127535**

(43) Date of publication of application:
**02.05.2018 Bulletin 2018/18**

(73) Proprietor: **AGC Inc.**
**Tokyo 100-8405 (JP)**

(72) Inventors:
• **KANEKO, Kyouichi**
**Tokyo 100-8405 (JP)**
• **SUGIYAMA, Kazunori**
**Tokyo 100-8405 (JP)**

• **FUKUDA, Reika**
**Tokyo 100-8405 (JP)**

(74) Representative: **Müller-Boré & Partner**
**Patentanwälte PartG mbB**
**Friedenheimer Brücke 21**
**80639 München (DE)**

(56) References cited:
**EP-A1- 2 208 771          WO-A1-2012/147625
WO-A1-2012/147625          WO-A1-2015/080060
JP-A- 2012 503 028**

EP 3 315 578 B1

(52) Cooperative Patent Classification (CPC): (Cont.)

C-Sets
**C08F 220/24, C08F 220/1811, C08F 214/08,
C08F 220/58**

**Description**

TECHNICAL FIELD

The present invention relates to a water repellent composition, a method for producing a water repellent composition, and an article treated by using the water repellent composition.

BACKGROUND ART

As a method for imparting water repellency to the surface of an article (a fiber product, etc.), a method of treating the article by using a water repellent composition having dispersed in a medium a copolymer having structural units based on a monomer having a polyfluoroalkyl group, is known.

As such a water repellent composition, for example, the following water repellent compositions have been proposed.

(1) A water/oil repellent composition containing a copolymer having structural units based on a fluorinated monomer having a $C_{1-20}$ polyfluoroalkyl group, and structural units based on a (meth)acrylate having a cyclic hydrocarbon group (Patent Document 1).

(2) A water/oil repellent composition containing a copolymer having structural units based on a fluorinated monomer having a $C_{1-6}$ polyfluoroalkyl group, structural units based on vinylidene chloride, and at least one type of structural units selected from structural units based on a monomer, of which the homopolymer has a glass transition temperature of at least 20°C, and structural units based on a monomer having a crosslinkable functional group (Patent Document 2).

(3) A water/oil repellent composition containing, as an active ingredient, a fluorine-containing copolymer comprising as a copolymerization unit:

(A) at least one of perfluoroalkylalkyl acrylates and corresponding methacrylates represented by $C_nF_{2n+1}C_mH_{2m}OCOCR=CH_2$, wherein R represents a hydrogen atom or a methyl group; n represents 4, 5, or 6; and m represents 1, 2, 3, or 4,

(B) benzyl acrylate or benzyl methacrylate,

(C) a fluorine-free polymerizable monomer other than benzyl acrylate and benzyl methacrylate, and

(D) a cross-linkable group-containing polymerizable monomer (Patent Document 3).

PRIOR ART DOCUMENTS

PATENT DOCUMENTS

Patent Document 1: JP-A-2012-503028

Patent Document 2: WO 2012/147625 and EP 2 703 466 A1

Patent Document 3: EP 2 208 771 A1

DISCLOSURE OF INVENTION

TECHNICAL PROBLEM

In a case where an article having water repellency imparted is a carpet or the like, it is required to repel hot (e.g. 60°C or higher) drinks (hot water, tea, coffee, etc.) (i.e. to have hot water repellency) and required to scarecely have soil attached or to have attached soil readily removed (hereinafter referred to as dry soil resistance).

However, the article treated by using the water repellent composition (1) or (2) was sometimes insufficient in water repellency against high temperature water (hereinafter referred to as hot water repellency), although it is excellent in water repellency against low-temperature water (hereinafter referred to simply as water repellency). Further, it was insufficient in dry soil resistance.

The present invention is to provide a water repellent composition, whereby it is possible to obtain an article excellent in hot water repellency and dry soil resistance, a method for producing such a water repellent composition, and an article excellent in hot water repellency and dry soil resistance.

SOLUTION TO PROBLEM

The present invention has the following embodiments as characterized in the claims.

ADVANTAGEOUS EFFECTS OF INVENTION

By the water repellent composition of the present invention, it is possible to obtain an article excellent in hot water repellency and dry soil resistance.

By the method for producing a water repellent composition of the present invention, it is possible to produce a water repellent composition, whereby it is possible to obtain an article excellent in hot water repellency and dry soil resistance.

The article of the present invention is excellent in hot water repellency and dry soil resistance.

DESCRIPTION OF EMBODIMENTS

In the present specification, a compound represented by formula (1) will be referred to as a compound (1). Compounds represented by other formulae will be referred to in the same manner.

A "(meth)acrylate" is used as a generic term for an acrylate and a methacrylate.

A "number average molecular weight" and a "mass average molecular weight" of a copolymer are values obtained as calculated as polystyrene by a gel permeation chromatography (GPC) method.

A "glass transition temperature" of a homopolymer is a middle point glass transition temperature measured by a differential scanning calorimetry (DSC) method in accordance with JIS K 7121: 1987.

<Water repellent composition>

The water repellent composition of the present invention comprises, as essential components, a copolymer having structural units based on monomer (a), structural units based on monomer (b), structural units based on monomer (c), structural units based on monomer (d), and an aqueous medium, and may contain, as the case requires, a surfactant, additives, etc.

Hereinafter, a copolymer having structural units based on monomer (a), structural units based on monomer (b), structural units based on monomer (c), and structural units based on monomer (d), may be referred to also as "copolymer (A)". Further, structural units based on a monomer may also be referred to as "monomer units", and structural units based on a monomer denoted by a symbol may be represented by putting "units" to the symbol (for example, structural units based on monomer (a) may be referred to also as "(a) units").

(Copolymer (A))

Copolymer (A) is a copolymer having structural units based on monomer (a) (i.e. "(a) units"), structural units based on monomer (b) (i.e. "(b) units"), structural units based on monomer (c) (i.e. "(c) units"), and structural units based on monomer (d) (i.e. "(d) units").

The copolymer (A) may have, as the case requires, structural units based on the later-described monomer (e) (i.e. "(e) units").

Monomer (a) is a compound (1).

$$R^F\text{-}Q\text{-}Z\text{-}C(O)C(R)=CH_2 \qquad (1).$$

Since the copolymer (A) has (a) units, it is possible to impart not only water repellency but also hot water repellency to an article treated by using the water repellent composition containing the copolymer (A).

$R^F$ is a $C_{4-6}$ perfluoroalkyl group. $R^F$ is particularly preferably a $C_6$ perfluoroalkyl group, whereby hot water repellency of the article treated by using the water repellent composition will be further excellent. $R^F$ may be linear or may be branched, and is preferably linear.

As $R^F$, the following groups may be mentioned.

$$F(CF_2)_4\text{-},$$

$$F(CF_2)_5\text{-},$$

$$F(CF_2)_6\text{-},$$

$(CF_3)_2CF(CF_2)_2-$.

Q is a divalent organic group having no fluorine atom, or a single bond.

As the divalent organic group, from the viewpoint of availability of the compound (1), an alkylene group is preferred, and $-CH_2CH_2-$ is more preferred. The alkylene group may be linear or may be branched. The alkylene group may have -O-, -NH-, - CO-, $-SO_2-$, -S-, $-CD^1=CD^2-$ (wherein $D^1$ and $D^2$ are each a hydrogen atom or a methyl group), etc.

As Q, the following groups may be mentioned.

$-CH_2-$,

$-CH_2CH_2-$

$-(CH_2)_3-$,

$-CH_2CH_2CH(CH_3)-$,

$-CH=CH-CH_2-$,

$-S-CH_2CH_2-$,

$-SO_2-CH_2CH_2-$,

$-CH_2CH_2CH_2-S-CH_2CH_2-$,

$-CH_2CH_2CH_2-SO_2-CH_2CH_2-$.

Z is -O- or -NH-. As Z, from the viewpoint of availability of the compound (1), -O-is preferred.

R is a methyl group or a chlorine atom. As R, a methyl group is preferred from such a viewpoint that hot water repellency of the article treated by using the water repellent composition will be further excellent.

As preferred specific examples of the compound (1), the following ones may be mentioned.

$F(CF_2)_6CH_2CH_2OC(O)C(CH3)=CH_2$,

$F(CF_2)_6CH_2CH_2OC(O)C(Cl)=CH_2$,

$F(CF_2)_4CH_2CH_2OC(O)C(CH_3)=CH_2$,

$F(CF_2)_4CH_2CH_2OC(O)C(Cl)=CH_2$.

Monomer (b) is a (meth)acrylate having a cyclic hydrocarbon group, of which the homopolymer has a glass transition temperature (hereinafter a glass transition temperature is referred to also as "Tg") of at least 50°C.

Since the copolymer (A) has (b) units, it is possible to impart hot water repellency and dry soil resistance to an article treated by using the water repellent composition containing the copolymer (A).

Tg of the homopolymer of monomer (b) is, from such a viewpoint that hot water repellency of an article treated by using the water repellent composition will be further excellent, preferably at least 50°C, more preferably at least 85°C. The upper limit for Tg of the homopolymer is preferably 200°C.

The cyclic hydrocarbon group is from a viewpoint that hot water repellency and dry soil resistance of an article treated by using the water repellent composition will be further excellent, an isobornyl group.

As the monomer (b), for example, the following ones may be mentioned. Indicated in the brackets, is the glass transition temperature of the homopolymer.

Isobornyl acrylate (90°C),

Isobornyl methacrylate (180°C).

As the monomer (b), isobornyl methacrylate is particularly preferred.

Monomer (c) is vinylidene chloride.

Since the copolymer (A) has (c) units, the film forming property of the copolymer (A) will be improved. Therefore, even at a portion where a coating film is otherwise hardly formed by the copolymer (A) as between fibers in an article (such as a fiber product), the copolymer (A) will penetrate well so that a uniform coating film by the copolymer (A) will be formed. As a result, it is possible to impart sufficient hot water repellency to the article.

Monomer (d) is a monomer having a crosslinkable functional group.

Since the copolymer (A) has (d) units, the durability (washing durability and heavy-rain durability) of an article treated by using the water/oil repellent composition can be further improved.

As the crosslinkable functional group, preferred is a functional group having at least one bond among a covalent bond, an ionic bond and a hydrogen bond, or a functional group capable of forming a crosslinked structure by interaction of such bonds.

As such a functional group, preferred is an isocyanate group, a blocked isocyanate group, an alkoxysilyl group, an amino group, an alkoxymethyl amide group, a silanol group, an ammonium group, an amide group, an epoxy group, a hydroxy group, an oxazoline group, a carboxy group, an alkenyl group, a sulfone acid group, etc. Particularly preferred is an epoxy group, a hydroxy group, a blocked isocyanate group, an alkoxysilyl group, an amino group or a carboxy group.

As the monomer (d), (meth)acrylates, acrylamides, vinyl ethers, or vinyl esters are preferred.

As the monomer (d), the following compounds may be mentioned.

2-Isocyanatoethyl (meth)acrylate, 3-isocyanatopropyl (meth)acrylate, 4-isocyanatobutyl (meth)acrylate, a 2-butanone oxime adduct of 2-isocyanatoethyl (meth)acrylate, a pyrazole adduct of 2-isocyanatoethyl (meth)acrylate, a 3,5-dimethylpyrazole adduct of 2-isocyanatoethyl (meth)acrylate, a 3-methylpyrazole adduct of 2-isocyanatoethyl (meth)acrylate, an ε-caprolactam adduct of 2-isocyanatoethyl (meth)acrylate, a 2-butanone oxime adduct of 3-isocyanatopropyl (meth)acrylate, a pyrazole adduct of 3-isocyanatopropyl (meth)acrylate.

A 3,5-dimethylpyrazole adduct of 3-isocyanatopropyl (meth)acrylate, a 3-methylpyrazole adduct of 3-isocyanatopropyl (meth)acrylate, an ε-caprolactam adduct of 3-isocyanatopropyl (meth)acrylate, a 2-butanone oxime adduct of 4-isocyanatobutyl (meth)acrylate, a pyrazole adduct of 4-isocyanatobutyl (meth)acrylate, a 3,5-dimethylpyrazole adduct of 4-isocyanatobutyl (meth)acrylate, a 3-methylpyrazole adduct of 4-isocyanatobutyl (meth)acrylate, an ε-caprolactam adduct of 4-isocyanatobutyl (meth)acrylate.

Methoxymethyl (meth)acrylamide, ethoxymethyl (meth)acrylamide, butoxymethyl (meth)acrylamide, di(meth)acetone acrylamide, γ-methacryloyloxypropyl trimethoxysilane, trimethoxyvinylsilane, vinyltrimethoxysilane, dimethylaminoethyl (meth)acrylate, diethylaminoethyl (meth)acrylate, dimethylaminopropyl (meth)acrylate, (meth)acryloyl morpholine, (meth)acryloyloxyethyl trimethyl ammonium chloride, (meth)acryloyloxypropyl trimethyl ammonium chloride, (meth)acrylamide ethyl trimethyl ammonium chloride, (meth)acrylamide propyl trimethyl ammonium chloride.

t-Butyl (meth)acrylamide sulfonic acid, (meth)acrylamide, N-methyl (meth)acrylamide, N-methylol (meth)acrylamide, N-butoxymethyl (meth)acrylamide, glycidyl (meth)acrylate, 2-hydroxyethyl (meth)acrylate, 2-hydroxypropyl (meth)acrylate, 4-hydroxybutyl (meth)acrylate, 3-chloro-2-hydroxypropyl methacrylate, a polyoxyalkylene glycol mono(meth)acrylate, (meth)acrylic acid, 2-(meth)acryloyloxyethyl succinic acid, 2-(meth)acryloyloxyhexahydrophthalic acid, 2-(meth)acryloyloxyethyl acid phosphate, allyl (meth)acrylate, 2-vinyl-2-oxazoline, a polycaprolactone ester of 2-vinyl-4-methyl-(2-vinyl-oxazoline)hydroxyethyl (meth)acrylate.

Tri(meth)allyl isocyanurate (T(M)AIC, manufactured by Nippon Kasei Chemical Co., Ltd.), triallyl cyanurate (TAC, manufactured by Nippon Kasei Chemical Co., Ltd.), phenyl glycidyl ether acrylate toluene diisocyanate urethane prepolymer (AT-600, manufactured by Kyoeisha Chemical Co., Ltd.), phenyl glycidyl ether acrylate hexamethylene diisocyanate urethane prepolymer (AH-600, manufactured by Kyoeisha Chemical Co., Ltd.), 3-(methyl ethyl ketoxime) isocyanatomethyl-3,5,5-trimethylcyclohexyl(2-hydroxyethyl methacrylate) cyanate (Tech Coat HE-6P, manufactured by Kyokenkasei), a poly-fluoro-vinyl-ether having a hydroxy group ($CF_2$=$CFOCF_2CF_2CF_2CH_2OH$, etc.).

As the monomer (d), preferred is N-methylol (meth)acrylamide, N-butoxymethyl (meth)acrylamide, 2-hydroxyethyl (meth)acrylate, 4-hydroxybutyl (meth)acrylate, a 3,5-dimethylpyrazole adduct of 2-isocyanatoethyl (meth)acrylate, a 3,5-dimethylpyrazole adduct of 3-isocyanatopropyl (meth)acrylate, diacetone acrylamide, glycidyl methacrylate, a polycaprolactone ester of hydroxyethyl (meth)acrylate, a polycaprolactone ester of hydroxyethyl (meth)acrylate, AT-600 or Tech Coat HE-6P. As the monomer (d), particularly preferred is N-methylol (meth)acrylamide, 2-hydroxyethyl (meth)acrylate, 4-hydroxybutyl (meth)acrylate, a 3,5-dimethylpyrazole adduct of 2-isocyanatoethyl (meth)acrylate, or a 3,5-dimethylpyrazole adduct of 3-isocyanatopropyl (meth)acrylate.

The copolymer (A) may further have structural units based on a monomer (hereinafter referred to also as monomer (e)) other than the monomer (a), the monomer (b), the monomer (c) and the monomer (d).

As the monomer (e), the following compounds may be mentioned.

Methyl acrylate, ethyl acrylate, propyl acrylate, butyl methacrylate, cyclohexyl acrylate, 2-ethylhexyl (meth)acrylate, butyl methacrylate, n-hexyl (meth)acrylate, stearyl (meth)acrylate, behenyl (meth)acrylate, vinyl acetate, vinyl propionate, butene, isoprene, butadiene, ethylene, propylene, vinyl ethylene, pentene, ethyl-2-propylene, butyl ethylene, cyclohexyl propyl ethylene, decyl ethylene, dodecyl ethylene, hexene, isohexyl ethylene, neopentyl ethylene, (1,2-diethoxycarbonyl) ethylene, (1,2-dipropoxycarbonyl) ethylene, methoxyethylene, ethoxyethylene, butoxyethylene, 2-methoxypropylene, pentyloxyethylene, cyclopentanoyloxyethylene, cyclopentylacetoxyethylene, styrene, α-methylstyrene, p-methylstyrene, hexylstyrene, octylstyrene, nonylstyrene, chloroprene, vinyl chloride, tetrafluoroethylene, vinylidene fluoride, 2,3,3,3-tetrafluoro-1-propene.

N,N-Dimethyl (meth)acrylamide, a vinyl alkyl ether, a halogenated alkyl vinyl ether, a vinyl alkyl ketone, butyl acrylate, propyl methacrylate, benzyl acrylate, octyl (meth)acrylate, decyl methacrylate, cyclododecyl acrylate, 3-ethoxypropyl acrylate, methoxy-butyl acrylate, 2-ethyl butyl acrylate, 1,3-dimethyl butyl acrylate, 2-methyl pentyl acrylate, aziridinyl ethyl (meth)acrylate, a 2-ethyl hexyl polyoxyalkylene (meth)acrylate, a polyoxyalkylene di(meth)acrylate.

A crotonic acid alkyl ester, a maleic acid alkyl ester, a fumaric acid alkyl ester, a citraconic acid alkyl ester, a mesaconic acid alkyl ester, triallyl cyanurate, allyl acetate, N-vinyl carbazole, maleimide, N-methyl maleimide, a (meth)acrylate having silicone in its side chain, a (meth)acrylate having an urethane bond, a (meth)acrylate having a polyoxyalkylene chain having a terminal $C_{1-4}$ alkyl group.

The proportion of (a) units in the copolymer (A) is from 20 to 80 mass%, preferably from 20 to 79.9 mass%, more preferably from 20 to 70 mass%, based on the total amount of all monomer units constituting the copolymer (A). When the proportion of (a) units is at least the lower limit value in the above range, hot water repellency of an article treated by using the water repellent composition will be excellent. When the proportion of (a) units is at most the upper limit value in the above range, the effects of other structural units will not be inhibited.

The proportion of (b) units in the copolymer (A) is from 15 to 60 mass%, preferably from 25 to 45 mass%, based on the total amount of all monomer units constituting the copolymer (A). When the proportion of (b) units is at least the lower limit value in the above range, hot water repellency and dry soil resistance of an article treated by using the water repellent composition will be excellent. When the proportion of (b) units is at most the upper limit value in the above range, the effects of other structural units will not be inhibited.

The proportion of (c) units in the copolymer (A) is from 5 to 55 mass%, preferably from 5 to 20 mass%, based on the total amount of all monomer units constituting the copolymer (A). When the proportion of (c) units is at least the lower limit value in the above range, hot water repellency of an article treated by using the water repellent composition will be excellent. When the proportion of (c) units is at most the upper limit value in the above range, the effects of other structural units will not be inhibited.

The proportion of (d) units in the copolymer (A) is 0.1 to 20 mass% based on the total amount of all monomer units constituting the copolymer (A). Since the copolymer (A) has (d) units, it is easy to improve the durability of an article treated by using the water repellent composition. Further, when the proportion of (d) units is at most the upper limit value in the above range, hot water repellency of an article treated by using the water repellent composition will be excellent.

The proportion of (e) units is, from the viewpoint of hot water repellency of an article treated by using the water repellent composition, preferably from 0 to 35 mass%, more preferably from 0 to 20 mass%, based on the total amount of all monomer units constituting the copolymer (A).

Here, the proportion of monomer units in the present invention is calculated based on the charged amount of the monomer at the time of production of the copolymer (A).

The mass average molecular weight (Mw) of the copolymer (A) is preferably from 8,000 to 1,000,000, more preferably from 10,000 to 800,000. When the mass average molecular weight (Mw) of the copolymer (A) is within the above range, it is possible to sufficiently express both hot water repellency and dry soil resistance.

The number average molecular weight (Mn) of the copolymer (A) is preferably from 3,000 to 800,000, more preferably 5,000 to 600,000. When the number average molecular weight (Mn) of the copolymer (A) is within the above range, it is possible to sufficiently express both hot water repellency and dry soil resistance.

(Aqueous Medium)

The aqueous medium in the water repellent composition of the present invention is a dispersion medium for the copolymer (A) and consists of water only, or a mixture of water and another liquid medium. The liquid medium other than water is made of a water-soluble organic solvent or inorganic solvent, preferably a water-soluble organic solvent. The water-soluble organic solvent is preferably an organic solvent having a boiling point of at least 100°C and being capable of swelling the copolymer (A). The organic solvent having a boiling point of at least 100°C and being capable of swelling the copolymer (A), may be, hereinafter, referred to also as a "film-forming assistant".

It is also possible to use a water-soluble organic solvent other than the film-forming assistant (e.g. a water-soluble organic solvent having a boiling point of lower than 100°C).

The aqueous medium in the water repellent composition may be the polymerization medium used in the production of the copolymer (A), itself, or one having a part or whole of the polymerization medium changed to another aqueous medium after the production of the copolymer (A), or an aqueous medium formed by adding water or another liquid medium to the polymerization medium after the production of the copolymer (A). Among them, an aqueous medium formed by adding water or another liquid medium to the polymerization medium after the production of the copolymer (A), is preferred. As the liquid medium to be added after the polymerization, water or a film-forming assistant is preferred. Further, it is also possible to use an aqueous medium containing a film-forming assistant, as the polymerization medium.

The water-soluble organic solvent is one which is water-soluble, among alcohols, glycols, glycol ethers, halogenated compounds (halogenated hydrocarbons, halogenated ethers, etc.), ketones, esters, ethers, nitrogen compounds (amides, N-methylpyrrolidone, pyridine, etc.), sulfur compounds (dimethyl sulfoxide, sulfolane, etc.), organic acids (carboxylic acids, etc.), etc. These may be ones which function as film-forming assistants.

As film-forming assistants, among the above, glycols, glycol ethers and nitrogen compounds having boiling points of at least 100°C may be mentioned. Specifically, polyethylene glycols such as ethylene glycol and diethylene glycol, polypropylene glycols such as propylene glycol and dipropylene glycol, glycol ethers such as monoalkyl ethers and dialkyl ethers of these glycols, and amides such as N,N-dialkyl carboxylic acid amides and N,N-dialkyl-alkoxy carboxylic acid amides, may be mentioned.

The aqueous medium preferably contains a film-forming assistant. That is, the aqueous medium is preferably a mixture of water and a film-forming assistant.

The boiling point of a film-forming assistant is at least 100°C, preferably at least 150°C, more preferably at least 200°C, particularly preferably at least 250°C. When the boiling point is at least 100°C, the film-forming assistant is capable of forming a uniform coating film of the copolymer (A) on a substrate at the time of drying at room temperature (hereinafter referred to as air drying), and it is possible to further improve the hot water repellency after air drying.

The proportion of the film-forming assistant in the aqueous medium is preferably from 0.1 to 20 mass%, more preferably from 0.5 to 10 mass%, particularly preferably from 1 to 5 mass%, based on the total amount of water and the film-forming assistant. When the content proportion of the film-forming assistant is at least 0.1 mass%, it is possible to further improve the hot water repellency after air drying. When the content proportion of the film-forming assistant is at most 20 mass%, the stability of the emulsified state becomes good, precipitation or the like of the water repellent composition is less likely to occur, and it is possible to realize ideal processing conditions.

The amount of the film-forming assistant to the copolymer (A) is preferably from 10 to 4,000 parts by mass, more preferably from 50 to 2,000 parts by mass, further preferably from 300 to 1,000 parts by mass, particularly preferably from 500 to 1,000 parts by mass, relative to 100 parts by mass of the copolymer (A). When the amount of the film-forming assistant is at least 10 parts by mass, compatibility with the copolymer (A) will be improved, and it becomes easy to form a uniform coating film on the surface of an article. When the amount of the film-forming assistant is at most 4,000 parts by mass, it is possible to form a uniform coating film of the copolymer (A) on a substrate, and to impart further hot water repellency to an article after air-drying.

Since the film-forming assistant has good compatibility with the copolymer (A), it is possible to effectively swell the copolymer (A). Further, since the film-forming assistant has a relatively high boiling point, it is less evaporative than water during air drying, whereby even at a portion where a coating film is otherwise hardly formed by the copolymer (A) as between fibers in an article (a fiber product, etc.), the copolymer (A) will be penetrated by the film-forming assistant, whereby it is possible to form a uniform coating film by the copolymer (A). As a result, it is possible to impart sufficient hot water repellency, especially hot water repellency after air drying, to the article.

As the film-forming assistant, the following film-forming assistant (x) or film-forming assistant (y) is particularly preferred.

The film-forming assistant (x) is compound (2).

$$R^1O(CH_2)_r(CHR^4)_sC(O)NR^2R^3 \qquad (2).$$

wherein r is an integer of from 0 to 3, s is 0 or 1, $R^1$ is a $C_{1-4}$ alkyl group, $R^2$ and $R^3$ are each independently a $C_{1-3}$ alkyl group, or a group having an etheric oxygen atom between carbon atoms of a $C_{2-3}$ alkyl group, and $R^4$ is a hydrogen atom or a methyl group.

$R^1$ may be linear or may be branched, and is preferably linear.

$R^1$ may, for example, be a methyl group, an ethyl group, a propyl group, an isopropyl group, an n-butyl group, etc., and is preferably an n-butyl group.

$R^2$ and $R^3$ may, for example, be a methyl group, an ethyl group, a propyl group, an isopropyl group, a methoxyethyl group, etc., and each is preferably a methyl group.

$R^4$ is preferably a hydrogen atom.

r + s is preferably 1 or 2.

As the compound (2), for example, the following compounds may be mentioned.

3-Alkoxy-N,N-dialkylpropionamide,
3-alkoxy-2-methyl-N,N-dialkylpropionamide,
2-alkoxy-N,N-dialkyl acetic acid amide,
1-alkoxy-N,N-dialkyl formic acid amide.

As the compound (2), from the viewpoint of excellent compatibility with the copolymer (A), preferred is a 3-alkoxy-N,N-dialkylpropionamide, more preferred is 3-n-butoxy-N,N-dimethylpropionamide (boiling point: 252°C) or 3-methoxy-N,N-dimethylpropionamide (boiling point: 204°C), and particularly preferred is 3-n-butoxy-N,N-dimethylpropionamide.

The film-forming assistant (y) is compound (3).

$$R^5\text{-}O\text{-}(CH_2CH_2O)_t\text{-}R^6 \qquad (3).$$

wherein t is 3 or 4, and $R^5$ and $R^6$ are each independently a $C_{1-4}$ alkyl group.

If t is 2 or less, the boiling point becomes low, and the film-forming assistant tends to evaporate prior to water at the time of air drying, whereby it will be difficult to form a uniform coating film of the copolymer (A) on a substrate. If t is 5 or more, the boiling point becomes high, the evaporation of the film-forming assistant tends to be slow, whereby the film-forming assistant tends to remain as a residue, or it tends to take time for air drying.

$R^5$ and $R^6$ may be linear or may be branched, and is preferably linear.

$R^5$ and $R^6$ may, for example, be a methyl group, an ethyl group, a propyl group, an isopropyl group, an n-butyl group, and a methyl group is preferred.

As the compound (3), for example, the following compounds may be mentioned.

Tetraethylene glycol dimethyl ether, triethylene glycol dimethyl ether, tetraethylene glycol diethyl ether, triethylene glycol diethyl ether, tetraethylene glycol di n-propyl ether, triethylene glycol di n-propyl ether, tetraethylene glycol isopropyl ether, triethylene glycol diisopropyl ether, tetraethylene glycol di n-butyl ether, and triethylene glycol di n-butyl ether.

As the compound (3), from the viewpoint of excellent compatibility with the copolymer (A), preferred is tetraethylene glycol dimethyl ether (boiling point: 275°C) or triethylene glycol dimethyl ether (boiling point: 216°C), particularly preferred is tetraethylene glycol dimethyl ether.

(Surfactant)

The water repellent composition of the present invention preferably contains a surfactant. The surfactant may be a surfactant used at the time of producing the copolymer (A) by emulsion polymerization, or a surfactant used at the time of dispersing the copolymer (A) obtained by another polymerization method in an aqueous medium. Preferably, the copolymer (A) is produced by emulsion polymerization as described later, and the water repellent composition of the present invention contains a surfactant used at that time. It is also possible to add a surfactant anew after the emulsion polymerization, as the case requires, to obtain a composition having a higher stability.

The surfactant may be a hydrocarbon-type surfactant or a fluorinated surfactant, and each may be an anionic surfactant, a nonionic surfactant, a cationic surfactant or an amphoteric surfactant.

As the surfactant, from the viewpoint of compatibility with additives, it is preferred to use a nonionic surfactant and amphoteric surfactant in combination, and from the viewpoint of stability of the copolymer (A), it is preferred to use a nonionic surfactant alone, or to use a nonionic surfactant and a cationic surfactant in combination.

The ratio of a nonionic surfactant to a cationic surfactant (nonionic surfactant / cationic surfactant) is preferably from 97/3 to 40/60 (mass ratio).

As the nonionic surfactant, preferred is at least one member selected from the group consisting of surfactants $s^1$ to $s^6$ as disclosed in WO2010/047258 and WO2010/123042, and amidoamine surfactants as disclosed in Japanese Patent No. 5,569,614.

As the cationic surfactant, preferred is surfactant $s^7$ as disclosed in WO2010/047258 and WO2010/123042.

As the amphoteric surfactant, preferred is surfactant $s^8$ as disclosed in WO2010/047258 and WO2010/123042.

Further, as the surfactant, surfactant $s^9$ (polymeric surfactant) as disclosed in WO2010/047258 and WO2010/123042 may be used.

Preferred embodiments of the surfactant are similar to the preferred embodiments as disclosed in WO2010/047258 and WO2010/123042.

As preferred examples of the nonionic surfactant, the following compounds may be mentioned.

$$C_{18}H_{37}O[CH_2CH(CH_3)O]_2\text{-}(CH_2CH_2O)_{30}H,$$

$$C_{18}H_{35}O\text{-}(CH_2CH_2O)_{26}H,$$

$$C_{18}H_{35}O\text{-}(CH_2CH_2O)_{30}H,$$

$$C_{16}H_{33}O[CH_2CH(CH_3)O]_5\text{-}(CH_2CH_2O)_{20}H,$$

$$C_{12}H_{25}O[CH_2CH(CH_3)O]_2\text{-}(CH_2CH_2O)_{15}H,$$

$(C_8H_{17})(C_6H_{13})CHO\text{-}(CH_2CH_2O)_{15}H$,

$C_{10}H_{21}O[CH_2CH(CH_3)O]_2\text{-}(CH_2CH_2O)_{15}H$,

$C_6F_{13}CH_2CH_2O\text{-}(CH_2CH_2O)_{15}H$,

$C_6F_{13}CH_2CH_2O[CH_2CH(CH_3)O]_2\text{-}(CH_2CH_2O)_{15}H$,

$C_4F_9CH_2CH_2O[CH_2CH(CH_3)O]_2\text{-}(CH_2CH_2O)_{15}H$,

$HO\text{-}(CH_2CH_2O)_{15}\text{-}(C_3H_6O)_{35}\text{-}(CH_2CH_2O)_{15}H$,

$HO\text{-}(CH_2CH_2O)_8\text{-}(C_3H_6O)_{35}\text{-}(CH_2CH_2O)_8H$,

$HO\text{-}(CH_2CH_2O)_9\text{-}(C_3H_6O)_{20}\text{-}(CH_2CH_2O)_9H$,

$HO\text{-}(CH_2CH_2O)_{45}\text{-}(C_3H_6O)_{17}\text{-}(CH_2CH_2O)_{45}H$,

$HO\text{-}(CH_2CH_2O)_{34}\text{-}(CH_2CH_2CH_2CH_2O)_{28}\text{-}(CH_2CH_2O)_{34}H$.

As specific preferred examples of the cationic surfactant, the following compounds may be mentioned.

Stearyl trimethyl ammonium chloride,
Stearyl dimethyl monoethyl ammonium ethyl sulfate,
Stearyl monomethyl di(polyethylene glycol) ammonium chloride,
Fluorohexyl trimethyl ammonium chloride,
Di(tallow alkyl) dimethyl ammonium chloride,
Dimethyl monococonut amine acetate,

Amidoamine quaternary ammonium salts as disclosed in Japanese Patent No. 5,569,614.

As preferred specific examples of the amphoteric surfactant, the following compounds may be mentioned.

Dodecyl betaine,
Stearyl betaine,
Dodecyl carboxymethyl hydroxyethyl imidazolinium betaine,
Dodecyl dimethyl amino acetic acid betaine,
Fatty acid amide propyl dimethyl amino acetic acid betaine.

The amount of the surfactant is preferably from 1 to 10 parts by mass, more preferably from 2 to 8 parts by mass, to 100 parts by mass of the copolymer (A).

(Additives)

Additives other than the above-described surfactant include a penetrating agent, a defoamer, a water absorbent, an antistatic agent, an anti-crease agent, a texture modifier, a water-soluble polymer (polyacrylamide, polyvinyl alcohol, etc.), a thermosetting agent (a methylolmelamine-type curing agent, a blocked isocyanate-type curing agent, etc.), an epoxy curing agent, a thermosetting catalyst, a crosslinking catalyst, a synthetic resin, a fiber stabilizing agent, etc.

(Method for producing water repellent composition)

The copolymer (A) is obtainable by copolymerizing the above-described monomers, and as the polymerization method, a dispersion polymerization method, an emulsion polymerization method, a suspension polymerization method or the like may be mentioned. Among them, an emulsion polymerization method is preferred.

By an emulsion polymerization method of copolymerizing the above-described monomers in an aqueous medium in the presence of a surfactant and a polymerization initiator, it is possible to produce a water repellent composition of the present invention containing the surfactant. The proportions of the respective monomers to the total amount of the monomer components to be copolymerized are the same as the proportions of the respective monomer units in the copolymer (A). That is, the proportion of the monomer (a) is from 20 to 80 mass%, the proportion of the monomer (b) is from 15 to 60 mass%, the proportion of the monomer (c) is from 5 to 55 mass%, and the proportion of the monomer (d) relative to the total amount of the monomer components to be copolymerized is from 0.1 to 20 mass%. In the case of copolymerizing a monomer (e), the proportion of the monomer (e) is preferably at most 35 mass%.

The aqueous medium to be used as the polymerization medium, may be water alone, or a mixture of water and another liquid medium (particularly a water-soluble organic solvent). As the polymerization medium, it is possible to use a mixture of water and a film-forming assistant. Further, as the polymerization medium, it is also possible to use a mixture of water and a water-soluble organic solvent other than a film-forming assistant.

The present invention is also a method for producing the above water repellent composition by the above-described emulsion polymerization method.

At the time of conducting the emulsion polymerization, from the viewpoint of improvement in the yield of the copolymer (A), it is preferred to pre-emulsify the mixture comprising monomer components (excluding a gaseous monomer), a surfactant and an aqueous medium before the emulsion polymerization. For example, a mixture comprising monomer components other than the monomer (c), a surfactant and an aqueous medium, is mixed and dispersed by a homomixer or a high pressure emulsifier, to obtain a pre-emulsion. Then, to the pre-emulsion, the monomer (c) and a polymerization initiator are added to carry out the emulsion polymerization of the monomer components.

As the polymerization initiator, a thermal polymerization initiator, a photopolymerization initiator, a radiation polymerization initiator, a radical polymerization initiator, an ionic polymerization initiator, etc. may be mentioned, and a radical polymerization initiator is preferred.

As the radical polymerization initiator, a common initiator such as an azo compound, a peroxide or a redox initiator is used depending on the polymerization temperature. As the radical polymerization initiator, an azo compound is preferred, and a salt of an azo compound is more preferred. The polymerization temperature is preferably from 20 to 150°C.

In the polymerization of the monomers, a molecular weight modifier may be used. As the molecular weight modifier, an aromatic compound, a mercapto alcohol or a mercaptan is preferred, and an alkyl mercaptan is particularly preferred. As the molecular weight modifier, mercaptoethanol, n-octyl mercaptan, n-dodecyl mercaptan, t-dodecyl mercaptan, stearyl mercaptan, $\alpha$-methylstyrene dimer, etc. may be mentioned.

Since monomers remaining after polymerization are not substantially detected, the proportions of monomers (a) to (e) are the same as the above-mentioned proportions of the structural units based on the respective monomers (a) to (e), and the preferred embodiments are also the same.

In the water repellent composition of the present invention, it is preferred that the copolymer (A) is dispersed as particles in the aqueous medium. The average particle size of the copolymer (A) is preferably from 10 to 1,000 nm, more preferably from 10 to 300 nm, particularly preferably from 10 to 200 nm. When the average particle size is within such a range, it is not necessary to use a surfactant or the like in a large amount, hot water repellency will be good, discoloration is less likely to occur when dyed fabrics are treated, and dispersed particles can exist stably in the aqueous medium without being precipitated. The average particle size of the copolymer (A) can be measured by a dynamic light scattering apparatus, an electron microscope, etc.

The solid content concentration of the water repellent composition of the present invention is preferably from 25 to 40 mass%, immediately after production of the water repellent composition.

At the time of treating an article, the solid content concentration of the water repellent composition of the present invention is preferably from 0.2 to 5 mass%.

The solid content concentration of the water repellent composition is calculated from the mass of the water repellent composition before heating and the mass after drying it in a convection dryer at 120°C for 4 hours.

(Advantageous effects)

By the water repellent composition of the present invention as described above, it is possible to obtain an article excellent in hot water repellency and dry soil resistance by treating the article by using the water repellent composition containing the copolymer (A).

That is, by (a) units and (b) units, the copolymer (A) becomes hard, and an article treated with the water repellent composition containing such a copolymer (A) will be able to exhibit hot water repellency and dry soil resistance. However, if the melting point of the copolymer (A) is high, the copolymer (A) does not penetrate throughout the article by heat, and it tends to be difficult to form a uniform coating film by the copolymer (A), whereby the article will not be able to exhibit sufficient hot water repellency. However, since the copolymer (A) has (c) units, the copolymer (A) can penetrate throughout the article at the processing temperature, whereby a uniform coating film by the copolymer (A) will be formed, and the article will be able to exhibit sufficient hot water repellency.

Further, in a case where the water repellent composition of the present invention contains a film-forming assistant, an article treated with the water repellent composition can exhibit hot water repellency even after air drying. Usually, in order to form a uniform coating film by the copolymer (A), after application of the water repellent composition to an article, it is necessary to dry it at a high temperature. On the other hand, in a case where the composition contains a film-forming assistant, even by air-drying after applying the water repellent composition to an article, the copolymer (A) will be penetrated throughout the article by the film-forming assistant, whereby it is possible to form a uniform coating film by the copolymer (A), so that the article will exhibit sufficient hot water repellency. In a case where water repellent treatment is to be applied to a carpet or the like which has already been installed in a room or the like, i.e. in a case where after application of the water repellent composition to an article, it is not possible to dry it at a high temperature, such a water repellent composition capable of imparting sufficient hot water repellency to the article by air drying, is useful.

Further, in the water repellent composition of the present invention, the copolymer (A) does not have structural units based on a monomer having a perfluoroalkyl group with 7 or more carbon atoms, whereby it is possible to bring the content (the content in the case of a solid concentration of 20%) of perfluorooctanoic acid (PFOA) or perfluorooctane sulfonic acid (PFOS) as well as precursors or analogues thereof, of which an environmental impact has been pointed out, to a level below the detection limit as an analytical value of LC-MS/MS by the method disclosed in WO 2009/081822.

<Article>

The article of the present invention is an article treated by using the water repellent composition of the present invention.

The article to be treated with the water repellent composition of the present invention includes fibers (natural fibers, synthetic fibers, blended fibers, etc.), various fiber products, nonwoven fabrics, resin products, paper, leather products, wood, metal products, stone, concrete products, gypsum products, glass products, etc. Particularly, carpets, tablecloths, kitchen wears and filters (for cars, industrial use), etc. which are required to have hot water repellency and dry soil resistance, are preferred.

The treating method may, for example, be a method of applying or impregnating the water repellent composition to an article by a known coating method, followed by drying.

(Advantageous effects)

The article of the present invention as described above is one treated by using the water repellent composition of the present invention, whereby it is excellent in hot water repellency and dry soil resistance.

EXAMPLES

The present invention will be described in detail with reference to the following Examples, but the present invention is not limited thereto.

Ex. 2 to 4, 6 to 8 and 11 to 14 are Examples of the present invention, and Ex. 1, 5, 9, 10 and 15 to 18 are Comparative Examples.

<Evaluation of test cloth>

(Water repellency)

With respect to a test cloth, the water repellency was evaluated in accordance with the spray test of JIS L 1092. The test was conducted by water at 27°C±1°C, at 60°C±2°C or at 80°C±2°C, and the appearance of the water droplets and the test cloth was observed. "Wetting" was represented by 5 grades of 1 to 5 in accordance with the water repellency evaluation standards of the spray test of JIS L 1092. The larger the score, the better the water repellency. Grades marked with + (-) indicate that the respective properties are slightly better (worse) than the standard ones of the grades. Further, as a grade, for example, one identified by "4-5" indicates that it is intermediate between 4 and 5. "Repelling" was evaluated by the following standards.

5: Repelling water droplets (water droplets are dancing).
4: Repelling of water droplets is slightly poor (waterline is linear).
3: Repelling of water droplets is poor (waterline is meandering).
2: Repelling of water droplets is significantly inferior (waterline meanders thick).
1: Repelling of water droplets is further inferior (water line is settled thick).

(Dry soil resistance)

In order to evaluate the dry soil resistance, anti-soiling properties (soil resistance properties) and soil removability (soil release properties) were evaluated.

With respect to the surface of the test cloth before soiling, L*, a* and b* values were measured by using a color difference meter (CR-300, manufactured by Minolta).

Soil resistance properties:

Three sheets of test cloth (5 cm × 5 cm), 0.5 g of the powder for JIS testing (Class 7, KANTO (Japanese) loam) and five rubber balls with a diameter of 15 mm were put in a plastic bag of 30 cm × 40 cm , and nitrogen gas was sealed in. The plastic bag was vigorously shaken for 5 minutes. L*, a* and b* at the soiled surface of the test cloth were measured by using a color difference meter, and from the following formula (I), the color difference $\Delta E_1$ was obtained and adopted as soil resistance properties. The smaller the numerical value, the better the soil resistance properties.

$$\Delta E_1 = \{(L_0^* - L_1^*)^2 + (a_0^* - a_1^*)^2 + (b_0^* - b_1^*)^2\}^{1/2} \qquad (I)$$

wherein $L_0^*$, $a_0^*$ and $b_0^*$ are L*, a* and b* at the surface of the test cloth before soiling, and $L_1^*$, $a_1^*$ and $b_1^*$ are L*, a* and b* at the soiled surface of the test cloth.

Soil release properties:

After the evaluation of soil resistance properties, the soil on the surface of the test cloth was sucked by a vacuum cleaner. L*, a* and b* at the surface of the test cloth after removal of the soil were measured by using a color difference meter, and from the following formula (II), the color difference $\Delta E_2$ was obtained and adopted as soil release properties. The smaller the numerical value, the better the soil release properties.

$$\Delta E_2 = \{(L_0^* - L_2^*)^2 + (a_0^* - a_2^*)^2 + (b_0^* - b_2^*)^2\}^{1/2} \qquad (II)$$

wherein $L_0^*$, $a_0^*$ and $b_0^*$ are L*, a* and b* at the surface of the test cloth before soiling, and $L_2^*$, $a_2^*$ and $b_2^*$ are L*, a* and b* at the surface of the test cloth after removal of the soil.

<Abbreviations>

(Monomers)

C6FMA: $F(CF_2)_6CH_2CH_2OC(O)C(CH_3)=CH_2$ .
IB-X: Isobornyl methacrylate (glass transition temperature of the homopolymer: 180°C).
VdCl: Vinylidene chloride.
N-MAM: N-Methylolacrylamide.
C8FA: $F(CF_2)_8CH_2CH_2OC(O)CH=CH_2$ .
VCM: Vinyl chloride.

(Surfactants)

E-430: Polyoxyethylene oleyl ether (Emulgen (registered trademark) 430, manufactured by Kao Corporation),
SFN-465: 2,4,7,9-tetramethyl-5-decyne-4,7-diol ethylene oxide adduct (Surfynol (registered trademark) 465, manufactured by Nissin Chemical Co., Ltd.),
P-204: ethylene oxide propylene oxide polymer (PLONON (registered trademark) #204, manufactured by NOF Corporation),
Aq-18: stearyl trimethyl ammonium chloride (Arquad 18-63, manufactured by Lion Corporation,).

(Molecular weight modifier)
St-SH: Stearyl mercaptan.
(Polymerization initiator)
VA-061A: Acetate of 2,2'-azobis[2-(2-imidazolin-2-yl)propane] (VA-061, manufactured by Wako Pure Chemical Industries, Ltd.).

(Water)
Water: Deionized water.
(Film-forming assistant)

DPG: Dipropylene glycol.
E-B100: 3-n-Butoxy-N,N-dimethylpropionamide (Equamide (registered trademark) B100, manufactured by Idemitsu Kosan Co., Ltd., boiling point: 252°C).

<Evaluation of hot water repellency>

(Ex. 1)

In a glass beaker, 229.32 g of C6FMA, 4.29 g of N-MAM, 5.15 g of E-430, 2.58 g of SFN-465, 2.58 g of P-204, 2.58 g of Aq-18, 1.29 g of St-SH, 397.87 g of water and 77.30 g of DPG were put and heated at 65°C for 40 minutes, followed by treatment by a high speed homogenizer (HIGH-FLEX DISPERSER HG-92, manufactured by SMT Co. Ltd.), to obtain a preliminary emulsion.
The obtained preliminary emulsion was, while being maintained at 60°C, treated with 40 MPa by using a high pressure emulsifying machine (LAB60, manufactured by Gaulin) to obtain an emulsion. The obtained emulsion was put in a stainless steel reaction vessel and cooled to at most 20°C, whereupon 25.77 g of VdCl and 1.29 g of VA-061A were added. The gas phase was replaced with nitrogen, and the polymerization reaction was carried out at 60°C for 12 hours, to obtain an emulsion of a copolymer (A'-1). The proportions of the structural units based on the respective monomers are shown in Table 1.
The emulsion of the copolymer (A'-1) was diluted with water, to obtain a water repellent composition with a solid content concentration of 0.6 mass%.
In the water repellent composition, a polyester wooly taffeta (red), a high density nylon taffeta (blue) and a polyester taffeta (red) were immersed and squeezed so that the wet pick-up would, respectively, be 63 mass%, 57 mass% and 32 mass%.
They were dried at 170°C for 60 seconds to obtain test cloths. The water repellency of each test cloth was evaluated. The results are shown in Table 1.

(Ex. 2 to 4)

An emulsion of each of copolymers (A-2) to (A-4) was obtained in the same manner as in Ex.1, except that the charged amounts of the respective monomers were changed so as to be the proportions of the structural units based on the respective monomers shown in Table 1. The proportions of the structural units based on the respective monomers are shown in Table 1.
Except that the emulsion of the copolymer (A'-1) was changed to the emulsion of each of the copolymers (A-2) to (A-4), a test cloth was obtained in the same manner as in Ex. 1. The water repellency of the test cloth was evaluated. The results are shown in Table 1.

[Table 1]

| | | | Ex. 1 | | Ex. 2 | | Ex. 3 | | Ex. 4 | |
|---|---|---|---|---|---|---|---|---|---|---|
| Copolymer | | | A'-1 | | A-2 | | A-3 | | A-4 | |
| Proportions of structural units based on monomers (mass%) | | C6FMA | 89 | | 59 | | 39 | | 29 | |
| | | IB-X | 0 | | 30 | | 50 | | 60 | |
| | | VdCl | 10 | | 10 | | 10 | | 10 | |
| | | N-MAM | 1 | | 1 | | 1 | | 1 | |
| Evaluation | | | Repelling | Wetting | Repelling | Wetting | Repelling | Wetting | Repelling | Wetting |
| Water repellency | Polyester wooly taffeta (red) | 27°C±1°C | 5 | 5 | 5 | 5 | 5 | 5 | 4-5 | 5- |
| | | 60°C±2°C | 4-5 | 4- | 5 | 5 | 5 | 5 | 4-5 | 5- |
| | | 80°C±2°C | 2 | 2 | 4-5 | 4- | 4-5 | 4 | 4-5 | 4- |
| | High density nylon taffeta (blue) | 27°C±1°C | 5 | 5 | 5 | 5 | 4 | 5 | 3 | 5 |
| | | 60°C±2°C | 3-4 | 5- | 4-5 | 5 | 4-5 | 5 | 3-4 | 5 |
| | | 80°C±2°C | 2 | 2- | 3-4 | 5 | 3-4 | 5 | 3-4 | 5- |
| | Polyester taffeta (red) | 27°C±1°C | 5 | 5 | 5 | 5 | 4 | 4+ | 4-5 | 4- |
| | | 60°C±2°C | 3-4 | 3+ | 4 | 5 | 4 | 4+ | 4 | 4- |
| | | 80°C±2°C | 1-2 | 2- | 3 | 4 | 3 | 4- | 3 | 3- |

In Ex. 2 to 4 wherein the treatment was made with a water repellent composition comprising the copolymer (A) having structural units based on IB-X, the hot water repellency was excellent as compared with in Ex. 1 wherein the treatment was made with a water repellent composition comprising the copolymer (A') not having structural units based on IB-X.

<Evaluation of dry soil resistance>

(Ex. 5)

In a glass beaker, 229.86 g of C6FMA, 4.30 g of N-MAM, 5.15 g of E-430, 2.58 g of SFN-465, 2.58 g P-204, 2.58 g of Aq-18, 1.29 g of St-SH, 397.87 g of water and 77.30 g of DPG were put and heated at 65°C for 40 minutes, followed by treatment by using a high speed homogenizer (HIGH-FLEX DISPERSER HG-92, manufactured by SMT Co. Ltd.), to obtain a preliminary emulsion .
The obtained preliminary emulsion was, while being maintained at 60°C, treated with 40 MPa by using a high pressure emulsifying machine (LAB60, manufactured by Gaulin) to obtain an emulsion. The obtained emulsion was put into a stainless steel reaction vessel and cooled to at most 20°C, whereupon 25.77 g of VdCl and 1.29 g of VA-061A were added. The gas phase was replaced with nitrogen, and the mixture was subjected to a polymerization reaction at 60°C for 12 hours, to obtain an emulsion of a copolymer (A'-5). The proportions of the structural units based on the respective monomers are shown in Table 2.
The emulsion of the copolymer (A'-5) was diluted with water, to obtain a water repellent composition with a solid content concentration of 0.6 mass%.
In the water repellent composition, a polyesterTropical fabric (white) was immersed, and then squeezed so that the wet pick-up would be 86 mass%.
This was dried at 170°C for 60 seconds to obtain a test cloth. Dry soil resistance of the test cloth was evaluated. The results are shown in Table 2.

(Ex. 6 to 8)

An emulsion of each of the copolymers (A-6) to (A-8) was obtained in the same manner as in Ex. 5 except that the charged amounts of the respective monomers were changed so that the proportions of the structural units based on the respective monomers would be as shown in Table 2. The proportions of the structural units based on the respective monomers are shown in Table 2.
A test cloth was obtained in the same manner as in Ex. 5, except that the emulsion of the copolymer (A'-5) was changed to the emulsion of each of the copolymers (A-6) to (A-8). Dry soil resistance of the test cloth was evaluated. The results are shown in Table 2.

(Ex. 9)

With respect to a polyester-Tropical fabric (white) not treated with the water repellent composition, dry soil resistance was evaluated. The results are shown in Table 2.

[Table 2]

| | | Ex. 5 | Ex. 6 | Ex. 7 | Ex. 8 | Ex. 9 |
|---|---|---|---|---|---|---|
| Copolymer | | A'-5 | A-6 | A-7 | A-8 | - |
| Proportions of structural units based on monomers (mass%) | C6FMA | 89 | 69 | 59 | 49 | - |
| | IB-X | 0 | 20 | 30 | 40 | - |
| | VdCl | 10 | 10 | 10 | 10 | - |
| | N-MAM | 1 | 1 | 1 | 1 | - |
| Dry soil resistance | Soil resistance properties | 24.5 | 22.2 | 21.3 | 21.6 | 33.9 |
| | Soil release properties | 17.1 | 16.1 | 12.8 | 12.0 | 24.3 |

In Ex. 6 to 8 wherein treatment was made with a water repellent composition containing the copolymer (A) having structural units based on IB-X, the dry soil resistance was excellent as compared with in Ex. 5 wherein treatment was made with a water repellent composition containing the copolymer (A') having no structural units based on IB-X.

<Evaluation of water repellency and dry soil resistance after air drying>

(Ex. 10)

The emulsion of the copolymer (A'-5) was diluted with water, and E-B100 was added to obtain a water repellent composition with a solid content concentration of 0.6 mass % and an E-B100 concentration of 2.0 mass%.
In the water repellent composition, a polyester Tropical fabric (white) was immersed, and then squeezed so that the wet pick-up would be 86 mass%.
This was air-dried at 23°C for 24 hours to obtain a test cloth. Water repellency and dry soil resistance of the test cloth were evaluated. The results are shown in Table 3.
Here, as an evaluation result, "-" indicates that no evaluation was carried out.

(Ex. 11 to 13)

A test cloth was obtained in the same manner as in Ex. 10 except that the emulsion of the copolymer (A'-5) was changed to the emulsion of each of the copolymers (A-6) to (A -8). Water repellency and dry soil resistance of the test cloth were evaluated. The results are shown in Table 3.

(Ex. 14)

A test cloth was obtained in the same manner as in Ex. 10 except that the emulsion of the copolymer (A'-5) was changed to the emulsion of the copolymer (A-3). Water repellency and dry soil resistance of the test cloth were evaluated. The results are shown in Table 3.

(Ex. 15)

With respect to polyesterTropical fabric (white) not treated with a water repellent composition, dry soil resistance was evaluated. The results are shown in Table 3.

[Table 3]

| | | | Ex. 10 | | Ex. 11 | | Ex. 12 | | Ex. 13 | |
|---|---|---|---|---|---|---|---|---|---|---|
| Copolymer | | | A'-5 | | A-6 | | A-7 | | A-8 | |
| Proportions of structural units based on monomers (mass%) | | C6FMA | 89 | | 69 | | 59 | | 49 | |
| | | IB-X | 0 | | 20 | | 30 | | 40 | |
| | | VdCl | 10 | | 10 | | 10 | | 10 | |
| | | N-MAM | 1 | | 1 | | 1 | | 1 | |
| Evaluation (after air-drying) | | | Repelling | Wetting | Repelling | Wetting | Repelling | Wetting | Repelling | Wetting |
| Water repellency | Polyester ·Tropical fabric (white) | 27°C±1°C | - | - | - | - | - | - | - | - |
| | | 60°C±2°C | 4 | 4 | 5 | 5 | 5 | 5 | 4-5 | 5 |
| | | 80°C±2°C | 2 | 2 | 4 | 3 | 4-5 | 5 | 4-5 | 4+ |
| Dry soil resistance | Soil resistance properties | | 21.1 | | 20.4 | | 19.9 | | 19.3 | |
| | Soil release properties | | 13.4 | | 11.9 | | 10.9 | | 11.4 | |

[Table 3 (continued)]

| | | | Ex. 14 | | Ex. 15 |
|---|---|---|---|---|---|
| Copolymer | | | A-3 | | - |
| Proportions of structural units based on monomers (mass%) | C6FMA | | 39 | | - |
| | IB-X | | 50 | | - |
| | VdCl | | 10 | | - |
| | N-MAM | | 1 | | - |
| Evaluation (after air-drying) | | | Repelling | Wetting | |
| Water repellency | Polyester 'Tropical fabric (white) | 27°C±1°C | - | - | - |
| | | 60°C±2°C | 4-5 | 5 | - |
| | | 80°C±2°C | 4 | 4- | - |
| Soil resistance properties | Dry soil resistance | | 19.3 | | 30.3 |
| Soil release properties | | | 10.6 | | 20.2 |

In Ex. 11 to 14 wherein treatment was conducted with a water repellent composition containing the copolymer (A) having structural units based on IB-X, hot water repellency and dry soil resistance after air drying were excellent as compared with in Ex. 10 wherein treatment was made with a water repellent composition containing the copolymer (A') having no structural units based on IB-X. Further, by using the film-forming assistant (x), even an air-dried article showed the same levels of hot water repellency and dry soil resistance as the article which was dried at 170°C.

<Evaluation of copolymer (A') having structural units based on C8FA>

(Ex. 16 to 17)

An emulsion of each of the copolymers (A'-16) to (A'-17) was obtained in the same manner as in Ex. 1 except that the charged amounts of the respective monomers were changed so that the proportions of the structural units based on the respective monomers would be as shown in Table 4. The proportions of the structural units based on the respective monomers are shown in Table 4.

**EP 3 315 578 B1**

A test cloth was obtained in the same manner as in Ex. 1, except that the emulsion of the copolymer (A'-1) was changed to the emulsion of each of the copolymers (A'-16) to (A'-17). Water repellency of the test cloth was evaluated. The results are shown in Table 4.

**20**

[Table 4]

| | | | Ex. 1 | | Ex. 2 | | Ex. 16 | | Ex. 17 | |
|---|---|---|---|---|---|---|---|---|---|---|
| Copolymer | | | A'-1 | | A-2 | | A'-16 | | A'-17 | |
| Proportions of structural units based on monomers (mass%) | | C6FMA | 89 | | 59 | | 0 | | 0 | |
| | | C8FA | 0 | | 0 | | 69 | | 59 | |
| | | IB-X | 0 | | 30 | | 30 | | 30 | |
| | | VdCl | 10 | | 10 | | 0 | | 10 | |
| | | N-MAM | 1 | | 1 | | 1 | | 1 | |
| Evaluation | | | Repelling | Wetting | Repelling | Wetting | Repelling | Wetting | Repelling | Wetting |
| Water repellency | Polyester wooly taffeta (red) | 27°C±1°C | 5 | 5 | 5 | 5 | 5 | 5 | 5 | 5 |
| | | 60°C±2°C | 4-5 | 4- | 5 | 5 | 3 | 3+ | 3 | 4- |
| | | 80°C±2°C | 2 | 2 | 4-5 | 4- | 3 | 3 | 2-3 | 3- |
| | High density nylon taffeta (blue) | 27°C±1°C | 5 | 5 | 5 | 5 | 5 | 5 | 5 | 5 |
| | | 60°C±2°C | 3-4 | 5- | 4-5 | 5 | 3 | 5 | 3 | 5 |
| | | 80°C±2°C | 2 | 2- | 3-4 | 5 | 3 | 3- | 3 | 3 |
| | Polyester taffeta (red) | 27°C±1°C | 5 | 5 | 5 | 5 | 4-5 | 5 | 4 | 5 |
| | | 60°C±2°C | 3-4 | 3+ | 4 | 5 | 2-3 | 2+ | 2 | 2+ |
| | | 80°C±2°C | 1-2 | 2- | 3 | 4 | 2 | 2 | 1-2 | 2 |

EP 3 315 578 B1

In Ex. 2 wherein the treatment was made with a water repellent composition comprising the copolymer (A) having structural units based on C6FMA, hot water repellency was excellent as compared in each of Ex. 16 and 17 wherein the treatment was made with a water repellent composition comprising the copolymer (A') having structural units based on C8FA instead of structural units based on C6FMA.

<Evaluation of copolymer (A') having no structural units based on monomer (c)>

(Ex. 18)

An emulsion of the copolymer (A'-18) was obtained in the same manner as in Ex. 1 except that the charged amounts of the respective monomers were changed so that the proportions of the structural units based on the respective monomers would be as shown in Table 5. The proportions of the structural units based on the respective monomers are shown in Table 5.

A test cloth was obtained in the same manner as in Ex. 1, except that the emulsion of the copolymer (A'-1) was changed to the emulsion of the copolymer (A'-18). Water repellency of the test cloth was evaluated. The results are shown in Table 5.

[Table 5]

| | | | Ex. 1 | | Ex. 2 | | Ex. 18 | |
|---|---|---|---|---|---|---|---|---|
| Copolymer | | | A'-1 | | A-2 | | A'-18 | |
| Proportions of structural units based on monomers (mass%) | | C6FMA | 89 | | 59 | | 79 | |
| | | IB-X | 0 | | 30 | | 20 | |
| | | VdCl | 10 | | 10 | | 0 | |
| | | VCM | 0 | | 0 | | 0 | |
| | | N-MAM | 1 | | 1 | | 1 | |
| Evaluation | | | Repelling | Wetting | Repelling | Wetting | Repelling | Wetting |
| Water repellency | Polyester wooly taffeta (red) | 27°C±1°C | 5 | 5 | 5 | 5 | 5 | 5 |
| | | 60°C±2°C | 4-5 | 4- | 5 | 5 | 4-5 | 4 |
| | | 80°C±2°C | 2 | 2 | 4-5 | 4- | 2-3 | 2+ |
| | High density nylon taffeta (blue) | 27°C±1°C | 5 | 5 | 5 | 5 | 5 | 5 |
| | | 60°C±2°C | 3-4 | 5- | 4-5 | 5 | 4 | 4 |
| | | 80°C±2°C | 2 | 2- | 3-4 | 5 | 2 | 2 |
| | Polyester taffeta (red) | 27°C±1°C | 5 | 5 | 5 | 5 | 4-5 | 5 |
| | | 60°C±2°C | 3-4 | 3+ | 4 | 5 | 4-5 | 5 |
| | | 80°C±2°C | 1-2 | 2- | 3 | 4 | 4 | 5 |

An article treated with the water repellent composition comprising the copolymer (A') not having structural units based on VdCl and structural units based on VCM, hot water repellency was inferior in the case of a polyester wooly taffeta (red) and a high density nylon taffeta (blue).

INDUSTRIAL APPLICABILITY

The water repellent composition of the present invention is useful as a water repellent to impart hot water repellency and dry soil resistance to e.g. carpets, etc.

**Claims**

1. A water repellent composition comprising a copolymer having structural units based on the following monomer (a), structural units based on the following monomer (b), structural units based on the following monomer (c), structural units based on the following monomer (d), and an aqueous medium,

wherein based on the total amount of structural units based on all monomers constituting the copolymer, the proportion of structural units based on the monomer (a) is from 20 to 80 mass%, the proportion of structural units based on the monomer (b) is from 15 to 60 mass%, the proportion of structural units based on the monomer (c) is from 5 to 55 mass%, and the proportion of structural units based on the monomer (d) is from 0.1 to 20 mass%,
Monomer (a): a compound represented by the following formula (1):

$$R^F\text{-}Q\text{-}Z\text{-}C(O)C(R)=CH_2 \qquad (1)$$

wherein $R^F$ is a $C_{4\text{-}6}$ perfluoroalkyl group, Q is a divalent hydrocarbon group having no fluorine atom, or a single bond, Z is -O- or -NH-, and R is a methyl group or a chlorine atom,
Monomer (b): an acrylate or methacrylate having a cyclic hydrocarbon group, of which the homopolymer has a glass transition temperature of at least 50°C,
Monomer (c): vinylidene chloride,
Monomer (d): a monomer having a crosslinkable functional group,
wherein the monomer (b) is isobornyl acrylate or isobornyl methacrylate.

2. The water repellent composition according to Claim 1, which further contains a surfactant.

3. The water repellent composition according to Claim 1 or 2, which further contains a film-forming assistant,
wherein the film-forming assistant is a water-soluble organic solvent having a boiling point of at least 100°C and being capable of swelling the copolymer (A).

4. The water repellent composition according to any one of Claims 1 to 3, wherein the water repellent composition is a water repellent composition for carpets.

5. A method for producing a water repellent composition, which comprises emulsion-polymerizing monomer components comprising the following monomer (a), the following monomer (b), the following monomer (c), and the following monomer (d) in an aqueous medium in the presence of a surfactant and a polymerization initiator, to produce a water repellent composition comprising a copolymer of said monomers,

wherein based on the total amount of the monomer components, the proportion of the monomer (a) is from 20 to 80 mass%, the proportion of the monomer (b) is from 15 to 60 mass%, the proportion of the monomer (c) is from 5 to 55 mass%, and the proportion of the monomer (d) is from 0.1 to 20 mass%,
Monomer (a): a compound represented by the following formula (1),

$$R^F\text{-}Q\text{-}Z\text{-}C(O)C(R)=CH_2 \qquad (1)$$

wherein $R^F$ is a $C_{4\text{-}6}$ perfluoroalkyl group, Q is a divalent hydrocarbon group having no fluorine atom, or a single bond, Z is -O- or -NH-, and R is a methyl group or a chlorine atom,
Monomer (b): a (meth)acrylate having a cyclic hydrocarbon group, of which the homopolymer has a glass transition temperature of at least 50°C,
Monomer (c): vinylidene chloride,
Monomer (d): a monomer having a crosslinkable functional group,
wherein the monomer (b) is isobornyl acrylate or isobornyl methacrylate.

6. The method for producing a water repellent composition according to Claim 5, wherein either the aqueous medium prior to polymerizing the monomer components contains a film-forming assistant, or a film-forming assistant is incorporated to the aqueous medium after polymerizing the monomer components,
wherein the film-forming assistant is a water-soluble organic solvent having a boiling point of at least 100°C and being capable of swelling the copolymer (A).

7. An article treated by using the water repellent composition as defined in any one of Claims 1 to 4.

8. The article according to Claim 7, wherein the article is a carpet.

**Patentansprüche**

1. Wasserabweisende Zusammensetzung, umfassend ein Copolymer mit Struktureinheiten basierend auf dem folgenden Monomer (a), Struktureinheiten basierend auf dem folgenden Monomer (b), Struktureinheiten basierend auf dem folgenden Monomer (c), Struktureinheiten basierend auf dem folgenden Monomer (d) und ein wässriges Medium,

   wobei, bezogen auf der Gesamtmenge der Struktureinheiten basierend auf allen Monomeren, die das Copolymer bilden, der Anteil der Struktureinheiten basierend auf dem Monomer (a) 20 bis 80 Massen-% beträgt, der Anteil der Struktureinheiten basierend auf dem Monomer (b) 15 bis 60 Massen-% beträgt, der Anteil der Struktureinheiten basierend auf dem Monomer (c) 5 bis 55 Massen-% beträgt und der Anteil der Struktureinheiten basierend auf dem Monomer (d) 0,1 bis 20 Massen-% beträgt,
   Monomer (a): eine Verbindung, dargestellt durch die folgende Formel (1):

$$R^F\text{-}Q\text{-}Z\text{-}C(O)C(R)=CH_2 \qquad (1)$$

   wobei $R^F$ eine $C_{4-6}$-Perfluoralkylgruppe ist, Q eine zweiwertige Kohlenwasserstoffgruppe ohne Fluoratom oder eine Einfachbindung ist, Z -O- oder -NH- ist, und R eine Methylgruppe oder ein Chloratom ist,
   Monomer (b): ein Acrylat oder Methacrylat mit einer cyclischen Kohlenwasserstoffgruppe, dessen Homopolymer eine Glasübergangstemperatur von mindestens 50°C aufweist,
   Monomer (c): Vinylidenchlorid,
   Monomer (d): ein Monomer mit einer vernetzbaren funktionellen Gruppe,
   wobei das Monomer (b) Isobornylacrylat oder Isobornylmethacrylat ist.

2. Wasserabweisende Zusammensetzung nach Anspruch 1, die weiter ein grenzflächenaktives Mittel enthält.

3. Wasserabweisende Zusammensetzung nach Anspruch 1 oder 2, die weiter ein Filmbildungshilfsmittel enthält, wobei das Filmbildungshilfsmittel ein wasserlösliches organisches Lösungsmittel mit einem Siedepunkt von mindestens 100°C ist, das in der Lage ist, das Copolymer (A) zu quellen.

4. Wasserabweisende Zusammensetzung nach einem der Ansprüche 1 bis 3, wobei die wasserabweisende Zusammensetzung eine wasserabweisende Zusammensetzung für Teppiche ist.

5. Verfahren zur Herstellung einer wasserabweisenden Zusammensetzung, das die Emulsionspolymerisation von Monomerkomponenten, die das folgende Monomer (a), das folgende Monomer (b), das folgende Monomer (c) und das folgende Monomer (d) umfassen, in einem wässrigen Medium in Gegenwart eines grenzflächenaktives Mittels und eines Polymerisationsinitiators umfasst, um eine wasserabweisende Zusammensetzung herzustellen, die ein Copolymer der Monomere umfasst,

   wobei, bezogen auf der Gesamtmenge der Monomerkomponenten, der Anteil des Monomers (a) 20 bis 80 Massen-% beträgt, der Anteil des Monomers (b) 15 bis 60 Massen-% beträgt, der Anteil des Monomers (c) 5 bis 55 Massen-% beträgt und der Anteil des Monomers (d) 0,1 bis 20 Massen-% beträgt,
   Monomer (a): eine Verbindung, dargestellt durch die folgende Formel (1),

$$R^F\text{-}Q\text{-}Z\text{-}C(O)C(R)=CH_2 \qquad (1)$$

   wobei $R^F$ eine $C_{4-6}$-Perfluoralkylgruppe ist, Q eine zweiwertige Kohlenwasserstoffgruppe ohne Fluoratom oder eine Einfachbindung ist, Z -O- oder -NH- ist, und R eine Methylgruppe oder ein Chloratom ist,
   Monomer (b): ein (Meth)acrylat mit einer cyclischen Kohlenwasserstoffgruppe, dessen Homopolymer eine Glasübergangstemperatur von mindestens 50°C aufweist,
   Monomer (c): Vinylidenchlorid,
   Monomer (d): ein Monomer mit einer vernetzbaren funktionellen Gruppe,
   wobei das Monomer (b) Isobornylacrylat oder Isobornylmethacrylat ist.

6. Verfahren zur Herstellung einer wasserabweisenden Zusammensetzung nach Anspruch 5, wobei entweder das wässrige Medium vor der Polymerisation der Monomerkomponenten ein Filmbildungshilfsmittel enthält oder ein Filmbildungshilfsmittel dem wässrigen Medium nach der Polymerisation der Monomerkomponenten zugesetzt wird, wobei das Filmbildungshilfsmittel ein wasserlösliches organisches Lösungsmittel mit einem Siedepunkt von mindestens 100°C ist, das in der Lage ist, das Copolymer (A) zu quellen.

**7.** Gegenstand, der unter Verwendung der wasserabweisenden Zusammensetzung wie in einem der Ansprüche 1 bis 4 definiert behandelt wurde.

**8.** Gegenstand nach Anspruch 7, wobei der Gegenstand ein Teppich ist.

**Revendications**

**1.** Composition hydrofuge comprenant un copolymère ayant des unités structurelles basées sur le monomère suivant (a), des unités structurelles basées sur le monomère suivant (b), des unités structurelles basées sur le monomère suivant (c), des unités structurelles basées sur le monomère suivant (d) et un milieu aqueux,

dans laquelle en fonction de la quantité totale d'unités structurelles basées sur l'ensemble des monomères constituant le copolymère, la proportion en unités structurelles basées sur le monomère (a) va de 20 à 80 % en masse, la proportion en unités structurelles basées sur le monomère (b) va de 15 à 60 % en masse, la proportion en unités structurelles basées sur le monomère (c) va de 5 à 55 % en masse, et la proportion en unités structurelles basées sur le monomère (d) va de 0,1 à 20 % en masse,
Monomère (a) : un composé représenté par la formule suivante (1) :

$$R^F\text{-}Q\text{-}Z\text{-}C(O)C(R)=CH_2 \qquad (1)$$

dans laquelle $R^F$ est un groupe perfluoroalkyle en $C_{4\text{-}6}$, Q est un groupe hydrocarbure divalent n'ayant aucun atome de fluor, ou une liaison simple, Z est -O- ou -NH- et R est un groupe méthyle ou un atome de chlore,
Monomère (b) : un acrylate ou méthacrylate ayant un groupe hydrocarbure cyclique dont l'homopolymère a une température de transition vitreuse d'au moins 50 °C,
Monomère (c) : du chlorure de vinylidène,
Monomère (d) : un monomère ayant un groupe fonctionnel réticulable,
dans laquelle le monomère (b) est l'acrylate d'isobornyle ou le méthacrylate d'isobornyle.

**2.** Composition hydrofuge selon la revendication 1, qui contient en outre un tensioactif.

**3.** Composition hydrofuge selon la revendication 1 ou 2, qui contient en outre un auxiliaire de formation de film, dans laquelle l'auxiliaire de formation de film est un solvant organique hydrosoluble ayant un point d'ébullition d'au moins 100 °C et qui est capable de gonfler le copolymère (A).

**4.** Composition hydrofuge selon l'une quelconque des revendications 1 à 3, dans laquelle la composition hydrofuge est une composition hydrofuge pour moquettes.

**5.** Procédé de production d'une composition hydrofuge, qui comprend polymériser en émulsion des composants monomères comprenant le monomère suivant (a), le monomère suivant (b), le monomère suivant (c) et le monomère suivant (d) dans un milieu aqueux en présence d'un tensioactif et d'un initiateur de polymérisation pour produire une composition hydrofuge comprenant un copolymère desdits monomères,

dans lequel en fonction de la quantité totale des composants monomères, la proportion en le monomère (a) va de 20 à 80 % en masse, la proportion en le monomère (b) va de 15 à 60 % en masse, la proportion en le monomère (c) va de 5 à 55 % en masse, et la proportion en le monomère (d) va de 0,1 à 20 % en masse,
Monomère (a) : un composé représenté par la formule suivante (1),

$$R^F\text{-}Q\text{-}Z\text{-}C(O)C(R)=CH_2 \qquad (1)$$

dans laquelle $R^F$ est un groupe perfluoroalkyle en $C_{4\text{-}6}$, Q est un groupe hydrocarbure divalent n'ayant aucun atome de fluor, ou une liaison simple, Z est -O- ou -NH- et R est un groupe méthyle ou un atome de chlore,
Monomère (b) : un (méth)acrylate ayant un groupe hydrocarbure cyclique dont l'homopolymère a une température de transition vitreuse d'au moins 50 °C,
Monomère (c) : du chlorure de vinylidène,
Monomère (d) : un monomère ayant un groupe fonctionnel réticulable,

dans lequel le monomère (b) est l'acrylate d'isobornyle ou le méthacrylate d'isobornyle.

6. Procédé de production d'une composition hydrofuge selon la revendication 5, dans lequel soit le milieu aqueux avant la polymérisation des composants monomères contient un auxiliaire de formation de film, soit un auxiliaire de formation de film est incorporé au milieu aqueux après polymérisation des composants monomères, dans lequel l'auxiliaire de formation de film est un solvant organique hydrosoluble ayant un point d'ébullition d'au moins 100 °C et qui est capable de gonfler le copolymère (A).

7. Article traité en utilisant la composition hydrofuge selon l'une quelconque des revendications 1 à 4.

8. Article selon la revendication 7, dans lequel l'article est une moquette.

## REFERENCES CITED IN THE DESCRIPTION

**Patent documents cited in the description**

- JP 2012503028 A
- WO 2012147625 A
- EP 2703466 A1
- EP 2208771 A1
- WO 2010047258 A
- WO 2010123042 A
- JP 5569614 B
- WO 2009081822 A